# EUROPÄISCHE PATENTSCHRIFT

(11) **EP 0 583 562 B1**
(45) Veröffentlichungstag und Bekanntmachung des Hinweises auf die Patenterteilung: **24.01.1996**
(21) Anmeldenummer: 93109019.5
(22) Anmeldetag: 04.06.1993
(51) Int. Cl.: B65G 59/02, B42C 19/08

(54) **Vorrichtung zum fortlaufenden Anlegen von Buchblocks**
Device for continuous feeding of inner books
Dispositif pour amener d'une manière continue des corps d'ouvrage

(30) Priorität: 20.08.1992 DE 4227478
(43) Veröffentlichungstag der Anmeldung: 23.02.1994
(73) Patentinhaber: Kolbus GmbH & Co. KG, D-32369 Rahden (DE)
(72) Erfinder: Döpke, Karl-Heinz, W-4993 Rahden (DE); Garlichs, Siemen, W-4992 Espelkamp (DE); Rathert, Horst, W-4950 Minden (DE)

(56) Entgegenhaltungen:
- US-A- 3 620 387
- US-A- 4 640 655

## Beschreibung

Die Erfindung betrifft eine Vorrichtung zum fortlaufenden Anlegen von Buchblocks, Büchern o. dgl. Produkte mit einem Produktstapel nacheinander in eine Entstapelstelle transportierenden Zuförderer, mit einer das jeweils oberste Produkt vom Produktstapel trennenden Vereinzelungseinrichtung und mit einem das abgetrennte Produkt übernehmenden Abförderer.

Aus der DE-A-28 04 781 sind ein Verfahren und eine Vorrichtung zum Entstapeln von Büchern bekannt, wobei ein Stapel zugeführt, erfaßt und aufwärts transportiert sowie das jeweils oberste Buch seitlich von dem Stapel abgeschoben wird. Die Vorrichtung besteht aus einem unteren Förderband, einem sich nach oben erstreckenden Paternoster mit daran befestigten Auflagen für den Stapel, einer Abschiebeeinrichtung mit Abschiebefingern über dem Paternoster und aus einem oberen Förderer, dem die einzelnen Bücher von der Abschiebeeinrichtung zum Abtransport zugeführt werden.

Durch Vereinzeln der gestapelten Bücher von oben soll die Vorrichtung die Bücher, insbesondere solche mit einem Schutzumschlag, schonend und ohne Gefahr einer Beschädigung entstapeln.

Der Paternoster besteht aus einem Rahmen mit in Führungen verlaufenden Ketten, an denen sich in vorbestimmten Abständen paarweise gegenüberliegende stabförmige Auflagen jeweils an den Ketten angeordnet befinden. Die Seiten führungen für die Ketten werden mit Hilfe von Spindeln, die in Quertraversen gelagert und in der Seitenführung abgestützt sind, auf unterschiedliche Formate der Bücher eingestellt.

Die Vorrichtung gemäß der DE-A-28 04 781 zum Entstapeln von Büchern verlangt, bedingt durch das vertikale Transportsystem zwischen dem unteren Einlaufförderer und dem oberen Ausfuhrförderer, einen verhältnismäßig großen baulichen Aufwand.

Die Aufgabe der Erfindung besteht darin, eine Vorrichtung der gattungsgemäßen Art zu schaffen, die eine hohe Taktleistung ermöglicht, einfach in der Konstruktion, zuverlässig im Betrieb und kostengünstig herzustellen ist.

Diese Aufgabe wird durch eine Vorrichtung mit den Merkmalen des Anspruchs 1 gelöst. Vorteilhafte Ausgestaltungen der Erfindung ergeben sich aus den Unteransprüchen.

Die Erfindung wird nachstehend anhand der Beschreibung von Ausführungsbeispielen und unter Bezugnahme auf die Zeichnung näher erläutert. Es zeigen:

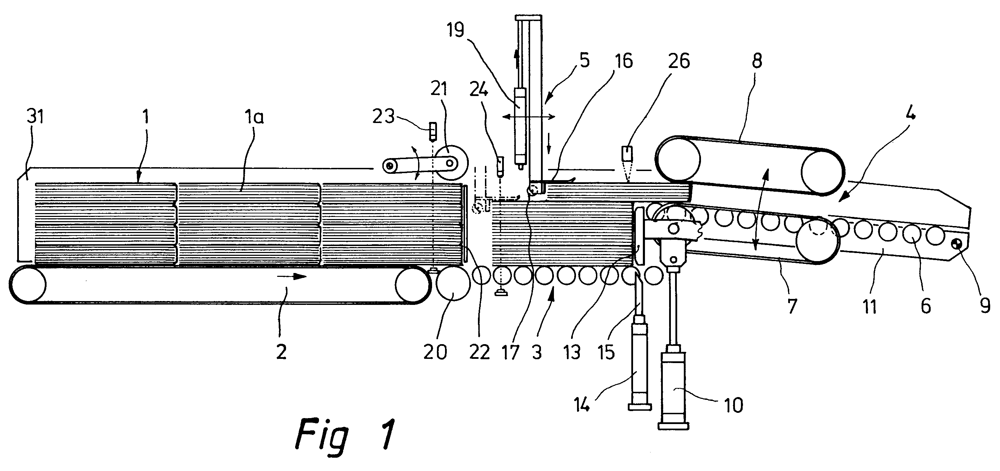

- Fig. 1: ein erstes Ausführungsbeispiel der Vorrichtung zum Anlegen von Buchblocks;
- Fig. 2: ein zweites Ausführungsbeispiel.

Die Vorrichtung zum fort laufenden Anlegen von Buchblocks 1a setzt sich im wesentlichen zusammen aus einem Zuförderer 2, einer von einer Rollenbahn 3 gebildeten Entstapelstelle, einem Abförderer 4 und einer der Entstapelstelle zugeordneten, den jeweils oben liegenden Buchblock 1a vom Buchblockstapel 1 trennenden Abschiebeeinrichtung 5.

Die Anlegevorrichtung befindet sich in einer unter 20° quer zur Transportrichtung geneigten Schräglage, was der Beibehaltung der Ausrichtung der einzelnen Buchstapel 1 sowie Buchblocks 1a an einer in Längsrichtung orientierten Anlagefläche 31 zweckdienlich ist.

Der Abförderer 4 wird von einem Rollenförderer 6 und einem in diesen integrierten schmalen Klemmförderer gebildet, der aus einem unteren umlaufend angetrieben Transportband 7, deren Obertrum niveaugleich zum Rollenförderer 6 liegt, und aus einem mit dem unteren Transportband 7 synchron umlaufend angetriebenen oberen Transportband 8 besteht. Über nicht dargestellte Mittel läßt sich der Abstand zwischen den beiden Bändern 7 und 8 der Buchblockstärke entsprechend einstellen.

Der Abförderer mit dem Rollenfördersystem 6 und den unteren und oberen Transportbändern 7, 8 ist in einem um einen Drehpunkt 9 mittels eines Arbeitszylinders 10 auf- und abschwenkbaren Rahmen 11 gelagert und läßt sich somit in seinem Neigungswinkel der jeweiligen Höhe des Reststapels 1 anpassen.

In Förderrichtung wird die Entstapelstelle mit der Rollenbahn 3 von einem von dem Abförderer 4 mitgeführten Rückhalteanschlag 13 mit einer geringfügig unter der Transportebene des jeweils zu vereinzelnden Buchblocks 1a liegenden Abschiebekante und von einem separaten von einem Arbeitszylinder 14 betätigbaren, durch die Rollenbahn 3 hindurch höhenverfahrbaren Rückhaltehilfsanschlag 15 begrenzt.

Im Hinblick auf das Anlegen von Buchblocks 1a unterschiedlicher Formate greifen das Rollenfördersystem 6 des Abförderers 4 und die Rollenbahn 3 der Entstapelstelle ineinander und das Rollenfördersystem 6 wird relativ zur Rollenbahn 3 in Längsrichtung verschoben.

Die der Entstapelstelle zugeordnete Abschiebeeinrichtung 5 läßt sich über nicht dargestellte Mittel gemäß Pfeilrichtung vor und zurückbewegen und weist einen die abzuschiebenden Buchblocks 1a hintergreifenden abgewinkelten Schieber 16 auf, der durch Eigengewicht auf den Buchblock 1a absenkbar und über einen Arbeitszylinder 19 aus seiner unteren abgesenkten Endposition in die obere Ausgangsposition zurückbewegbar ist.

Nach Vorschieben eines Buchblocks 1a in den Wirkbereich der unteren und oberen Transportbänder 7, 8 des Abförderers 4 fällt der Schieber 16 beim Rückhub selbsttätig auf den oberen Buchblock 1a des Reststapels 1 und stützt sich zur Vermeidung von Markierungen mittels einer Rolle 17 auf dem Buchblock 1a ab.

Zwischen dem Zuförderer 2 und der Rollenbahn 3 der Entstapelstelle befindet sich niveaugleich mit dem Zuförderer 2 eine Beschleunigungsrolle 20 mit einer zugeordneten, um einen Drehpunkt gemäß Pfeilrichtung schwenkbaren drehangetriebenen Gegendruckrolle 21 mit der Aufgabe den vorderen Buchblockstapel 1 vom nachfolgenden wegzuziehen, um eine Lücke für eine hineinsteuerbare Sperre 22 zum Zurückhalten eines folgenden Stapels 1 zu schaffen.

Nachfolgend soll die Arbeitsweise der Vorrichtung zum Anlegen von Buchblocks beschrieben werden.

Die einzelnen Buchblockstapel 1 gelangen über den Zuförderer 2 und die Beschleunigungsrolle 20 mit Gegendruckrolle 21 nach öffnen der Sperre 22 auf die während der Zufuhr angetriebene Rollenbahn 3 der Entstapelstelle bis vor den eingefahrenen Rückhaltehilfsanschlag 15, beginnend während des Ausschiebens des letzten Buchblocks 1a des Stapels 1 und gesteuert durch eine Lichtschranke 24. Dabei entsteht infolge der höheren Umlaufgeschwindigkeit der Beschleunigungseinrichtung 20, 21 gegenüber der Lineargeschwindigkeit des Zuförderers 2 eine Lücke zwischen dem vorderen und dem nachfolgenden Buchblockstapel 1. Der Anschlag 15 kehrt unmittelbar danach in seine untere Endstellung zurück. Der Zuförderer 2 transportiert einen nachfolgenden Buchblockstapel 1 in Warteposition vor die wieder in Position gefahrene Sperre 22, gesteuert durch eine Lichtschranke 23.

Die sich in der oberen Ausgangsstellung befindende Abschiebeeinrichtung 5 hintergreift mit ihrem Schieber 16 den oben liegenden Buchblock 1a und schiebt ihn mit dem Rücken voran über die Abschiebekante des Rückhalteanschlags 13 hinweg in den Wirkbereich der Transportbänder 7, 8 des vorab nach oben geschwenkten Abförderers 4, der den Buchblock 1a erfaßt und weitertransportiert. Die Abschiebeeinrichtung 5 nimmt wieder ihre Ausgangsposition ein und hintergreift einen nachfolgenden Buchblock 1a durch Absenken.

Gesteuert über Lichttaster 26 und betätigt über den Arbeitszylinder 10 schwenkt der Abförderer 4 zwischenzeitlich um den Drehpunkt 9 der Reststapelhöhe 1 entsprechend in die neue Übernahmeposition abwärts und die Abschiebeeinrichtung 5 erhält erneut den Befehl zum Ausschieben des obenliegenden nachfolgenden Buchblocks 1a.

Während des Abtransportes des letzten Buchblocks 1a des Stapels 1 wird die Abschiebeeinrichtung 5, gesteuert über den Lichttaster 24, in ihre obere Endstellung zurückgefahren, die Sperre 22 geöffnet und ein nachfolgender Buchblockstapel 1 zugeführt, indem die Beschleunigungsrolle 20 mit der Gegendruckrolle 21, der Zuförderer 2 und Rollenbahn 3 angetrieben werden. Letztlich erhält der Arbeitszylinder 10 den Befehl vom Lichttaster 26 zum Hochschwenken des Abförderers 4 und das Anlegen von Buchblocks 1a eines neuen Buchblockstapels 1 beginnt.

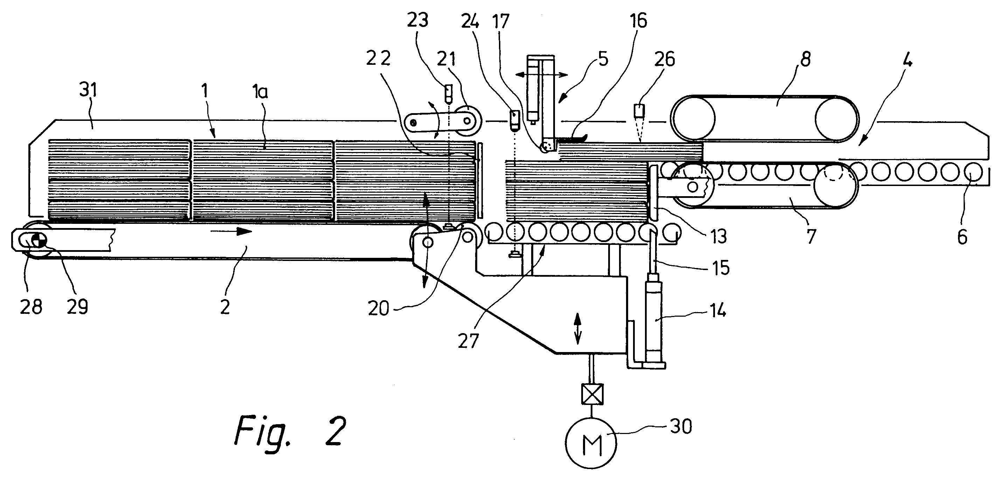

In dem zweiten Ausführungsbeispiel gemäß Fig. 2 verbleibt der Abförderer 4 in einer Horizontallage und der Zuförderer 2 ist um einen Drehpunkt 29 auf- und abschwenkbar und in seinem Neigungswinkel auf die jeweilige Höhe des abnehmenden Buchblockstapels 1 selbsttätig einstellbar.

Ebenso wie der Abförderer 4 verbleibt auch die Abschiebeeinrichtung 5 auf konstantem Niveau und wird lediglich beim Zuführen eines neuen Buchblockstapels 1 aus der Bewegungsebene verfahren und nach Erreichen der unteren Endstellung des Zuförderers 2 wieder zurückbewegt.

Vorzugsweise schließt sich an den Zuförderer 2 eine horizontale Rollenbahn 27 als Entstapelstelle an, die mit dem Zuförderer 2 gelenkig in Verbindung steht. über einen Stellantrieb 30 läßt sich die Rollenbahn 27 in Vertikalebene gemäß Pfeilrichtung auf- und niederbewegen und nimmt dabei den Zuförderer 2 mit den Buchblockstapeln 1 mit. Für den erforderlichen Längenausgleich befindet sich die Drehachse des Zuförderers 2 in einem Langloch 28.

Zwischen Rollenbahn 27 und Zuförderer 2 ist eine Beschleunigungsrolle 20 mit zusteuerbarer Gegendruckrolle 21 installiert.

Die Arbeitsweise der Vorrichtung wird nachfolgend beschrieben.

Über den Zuförderer 2 und die Beschleunigungsrolle 20 mit Gegendruckrolle 21 gelangen die Buchblockstapel 1 nach öffnen der Sperre 22 bis vor den eingefahrenen Anschlag 15, wobei der voran laufende Buchblockstapel 1 auf Abstand zu dem nachfolgenden Stapel gebracht wird, der, gesteuert durch Lichtschranke 23, bis vor die wieder eingefahrene Sperre 22 läuft. Die während der Zufuhr angetriebene Rollenbahn 27 mit dem Zuförderer 2 wird auf Höhe so verfahren, daß die Unterkante des obersten Buchblocks 1a geringfügig oberhalb der Abschiebekante des Rückhalteanschlags 13 liegt. Für das Positionieren sorgt ein Lichttaster 26. Der oberste Buchblock 1a wird von der Abschiebeeinrichtung 5 hintergriffen und vorgeschoben, so daß er von den Transportbändern 7, 8 des Abförderers 4 erfaßt und weitertransportiert werden kann. Nach jedem Vereinzelungsvorgang erfolgt eine Höhenanpassung der Rollenbahn 27 mit dem Zuförderer 2 gesteuert über Lichttaster 26.

Beim Stapelwechsel beginnt der Vorschub über den Zuförderer 2 und die Beschleunigungseinrichtung 20, 21 unmittelbar mit dem Ausschiebehub des letzten Buchblocks 1a gesteuert über eine Lichtschranke 24 bis zum eingefahrenen Rückhaltehilfsanschlag 15 und während des Vorschubs fährt der Zuförderer 2 mit der Rollenbahn 27 in die Ausgangsstellung.

Anstelle der in den beiden dargestellten und beschriebenen Ausführungsbeispielen eingesetzten Abschiebeeinrichtung läßt sich ebenso eine Saugervereinzelung einsetzen, beispielsweise unter Verwendung von Teleskopsaugern.

Die erfindungsgemäße Vorrichtung beschränkt sich nicht auf das fortlaufende Anlegen von Buchblocks, sie läßt sich ebenso als Stapelvorrichtung für Buchblocks verwenden.

## Patentansprüche

1. Vorrichtung zum fortlaufenden Anlegen von Buchblocks, Büchern o. dgl. Produkte mit einem Produktstapel nacheinander in eine Entstapelstelle transportierenden Zuförderer (2), mit einer das jeweils oberste Produkt vom Produktstapel trennenden Vereinzelungseinrichtung (5) und mit einem das abgetrennte Produkt übernehmenden Abförderer (4), dadurch gekennzeichnet, daß der das Produkt (1a) übernehmende Abförderer (4) relativ zum Produktstapel (1) oder der Zuförderer (2) mit dem Produktstapel (1) relativ zum Abförderer (4) über Betätigungsmittel (10, 30) auf- und abschwenkbar und über Steuermittel (26) in seinem Neigungswinkel auf die jeweilige Höhe des abnehmenden Produktstapels (1) selbsttätig einstellbar ist und daß der Abförderer als Klemmförderer (7, 8) ausgebildet ist, der das von einer Vereinzelungseinrichtung (5) bis zum Wirkbereich des Klemmförderers (7, 8) vorgeschobene Produkt (1a) erfaßt und weitertransportiert.

2. Vorrichtung nach Anspruch 1, dadurch gekennzeichnet, daß der Abförderer (4) aus einem Rollenfördersystem (6) mit einem integrierten oberen und unteren die Produkte (1a) einklemmenden Transportband (7, 8) gebildet ist.

3. Vorrichtung nach Anspruch 1 oder 2, dadurch gekennzeichnet, daß die Vereinzelungseinrichtung als eine in Horizontalebene verfahrbare Abschiebeeinrichtung (5) mit einem das Produkt (1a) hintergreifenden, durch Eigengewicht absenkbaren Schieber (16) ausgebildet ist.

4. Vorrichtung nach Anspruch 1 bis 3, gekennzeichnet durch eine vor der Entstapelstelle (3) angeordnete, einen Produktstapel (1) übernehmende und gegenüber einem nachfolgenden Produktstapel (1) auf einen definierten Abstand bringende Beschleunigungseinrichtung (20, 21).

5. Vorrichtung nach Anspruch 1 bis 4, dadurch gekennzeichnet, daß der Abförderer (4) einen Rückhalteanschlag (13) mitführt und ein Rückhaltehilfsanschlag (15) in die Bewegungsbahn des Produktstapels (1) fahrbar ist.

6. Vorrichtung nach Anspruch 1 bis 5, dadurch gekennzeichnet, daß die Entstapelstelle von einer Rollenbahn (3) gebildet ist.

7. Vorrichtung nach Anspruch 1 bis 6, dadurch gekennzeichnet, daß sich diese in einer quer zur Förderrichtung geneigten Schräglage befindet und daß die Produkte (1a) an einer sich in Längsrichtung orientierten Anlagefläche (31) abstützen.

8. Vorrichtung nach Anspruch 1, gekennzeichnet durch eine in Horizontalebene orientierte an den Zuförderer (2) angelenkte höhenverfahrbare und dabei den Zuförderer (2) mitführende Rollenbahn (27).

## Claims

1. An apparatus for the continuous infeeding of book blocks, books, or like products, said apparatus having an entry conveyor (2) which transports product stacks into a destacking station (5), one after another, a separating system which separates the momentarily uppermost product from the product stack, and an exit conveyor (4) which acquires the product thus separated, wherein, through the agency of operating means (10, 30), the exit conveyor (4) which acquires the product (1a) can be swung up and down relative to the product stack (1), or the entry conveyor (2), with the product stack (1), can be swung up and down relative to the exit conveyor (4), and the inclination of said entry conveyor is automatically adjustable, through the agency of control means (26), to suit the height of the diminishing product stack (1) at any given moment, and wherein the exit conveyor is configured as a gripping-type conveyor (7, 8), acquiring the product (1a) pushed forward by a separating system (5) as far as the region where the conveying action is exerted, and transporting said product (1a) onward.

2. The apparatus as claimed in claim 1, wherein the exit conveyor (4) is formed by a roller conveyor system (6) with integrated upper and lower transport belts (7, 8) which grip the products (1a).

3. The apparatus as claimed in claim 1 or 2, wherein the separating system is configured as a push-off device (5), which can be moved in a horizontal plane, with a pusher (16) which engages behind the product (1a) and can be lowered under its own weight.

4. The apparatus as claimed in any one of claims 1 to 3, wherein an accelerating arrangement (20, 21) is installed ahead of the destacking station (3), said accelerating arrangement acquiring a product stack (1) and bringing it to a defined distance ahead of the product stack (1) which is next in line.

5. The apparatus as claimed in any one of claims 1 to 4, wherein a hold-back stop (13) is moved by and with the exit conveyor (4), and an auxiliary hold-back stop (15) can be moved into the path on which the product stack (1) moves.

6. The apparatus as claimed in any one of claims 1 to 5, wherein the destacking station is formed by a roller track (3).

7. The apparatus as claimed in any one of claims 1 to 6, being transversely inclined relative to the conveying direction and wherein the products (1a) are supported on a supporting surface (31) which is oriented in the longitudinal direction.

8. The apparatus as claimed in claim 1, wherein a roller track (27) is articulated to the entry conveyor (2), is oriented in a horizontal plane and is movable up and down in the vertical plane, and when thus moved, said roller track (27) also moves said entry conveyor (2).

## Revendications

1. Dispositif pour le positionnement continu de volumes brochés, livres ou produits similaires, comportant un transporteur d'alimentation (2) acheminant l'une après l'autre les piles de produits vers une station de désempilement, un dispositif d'individualisation (5) pour séparer le produit le lus haut de la pile de produits, et, un transporteur d'évacuation (4) assurant l'acheminement ultérieur du produit individualisé, *caractérisé en ce que*
- grâce à des moyens d'actionnement (10), (30), le transporteur d'évacuation (4) se chargeant du produit (1a) peut pivoter vers le haut et vers le bas par rapport à la pile de produits (1) et le transporteur d'alimentation (2) avec la pile (1) peut pivoter vers le haut et vers le bas par rapport au transporteur d'évacuation (4),
- grâce à des moyens de guidage (26), l'angle d'inclinaison du transporteur d'évacuation (4) est réglable automatiquement en fonction de la hauteur donnée de la pile de produits (1) qui diminue progressivement,
- le transporteur d'évacuation présente la conformation d'un transporteur à serrage (7), (8) qui saisit le produit (1a) acheminé depuis le dispositif d'individualisation (5) jusqu'à la zone de travail du transporteur à serrage (7), (8) pour assurer son acheminement ultérieur.

2. Dispositif selon la revendication 1 *caractérisé en ce que* le transporteur d'évacuation (4) est constitué d'un système de transporteur à rouleaux (6) avec une bande transporteuse supérieure (8) et une bande transporteuse inférieure (7) intégrées, enserrant le produit (1a).

3. Dispositif selon les revendications 1 et 2 *caractérisé en ce que* le dispositif d'individualisation est constitué d'un dispositif pousseur (5) déplaçable dans un plan horizontal, pourvu d'un coulisseau (16), s'engageant derrière le produit (1a) et pouvant s'abaisser sous son propre poids.

4. Dispositif selon les revendications 1 et 3 *caractérisé par* un dispositif d'accélération (20), (21) prévu devant la station de désempilement (3), qui saisit une pile de produits (1) pour l'écarter d'une longueur déterminée de la pile de produits (1) suivante.

5. Dispositif selon les revendications 1 à 4 *caractérisé en ce que* le dispositif d'évacuation (4) comporte une butée d'appui (13) et *en ce qu*'une butée auxiliaire d'appui (15) est déplaçable dans le chemin de mouvement de la pile de produits (1).

6. Dispositif selon les revendications 1 à 5 *caractérisé en ce que* la station de désempilement est constitué d'un transporteur à rouleaux (3).

7. Dispositif selon les revendications 1 à 6 caractérisé *en ce qu*'il se trouve en une position inclinée perpendiculairement par rapport au dispositif transporteur et *en ce que* les produits (1a) sont alignés sur une surface d'appui (31) orientée longitudinalement.

8. Dispositif selon la revendication 1 à 6 *caractérisé par* un transporteur à rouleaux (27) orienté horizontalement, articulée sur le transporteur d'alimentation (2), déplaçable en hauteur en emmenant ledit transporteur d'alimentation (2).
